# EUROPÄISCHE PATENTANMELDUNG

(11) **EP 2 672 593 A2**
(43) Veröffentlichungstag der Anmeldung: **11.12.2013**
(21) Anmeldenummer: 13305741.4
(22) Anmeldetag: 04.06.2013
(51) Int. Cl.: H02G 3/06

(54) **Kupplungselement zur Verbindung abzweigender Kanalabschnitte eines Leitungsführungskanals**

(30) Priorität: 06.06.2012 DE 202012005536 U
(71) Anmelder: Tehalit GmbH, 67716 Heltersberg (DE)
(72) Erfinder: Broschart, Peter, 76764 Rheinzabern (DE); Vatter, Klaus, 66978 Clausen (DE)
(74) Vertreter: Nuss, Laurent

(57) **Zusammenfassung**

Die vorliegende Erfindung betrifft ein Kupplungselement, umfassend eine in etwa rechteckförmige Grundplatte (1) mit zwei sich gegenüberliegenden Längsseiten (11, 14) und sich gegenüberliegenden Breitseiten (12, 15) sowie zwei links- und rechtsseitig an der vorderen Längsseite (11) der Grundplatte (1) ausgeformten Stützlappen (3) und ebenfalls zwei Schenkeln (2), die jeweils einen ausgebildeten Innenrand (8) und einen dazu nach hinten versetzten, ausgeformten Außenrand (9) umfassen, dadurch gekennzeichnet, dass an dem Innenrand (8) der Schenkel (2) jeweils eine gegenüber der Oberfläche der Grundplatte (1) in einem Winkel von etwa 90 Grad nach oben gebogene und in Längsrichtung der Grundplatte (1) verlaufende Kaschierleiste (6) ausgeformt ist, an deren zur Mitte der Grundplatte (1) weisendem Ende eine zur vorderen Längsseite (11) der Grundplatte (1) weisende Zunge (7) ausgeformt ist.

## Beschreibung

Bei der Montage von Leitungsführungskanälen wie z.B. Brüstungskanälen oder Wandkanälen müssen Kabelkanalabschnitte entweder über Eck oder verzweigt installiert werden; Kupplungselemente zur Verbindung solcher aufeinander stoßender Kabelkanalabschnitte sind bereits bekannt. Beispielsweise beschreibt die DE 20 2008 014 724 U1 ein Kupplungselement mit einem Seitenelement, einer an dem Seitenelement ausgebildeten Kopfleiste, welche mit Deckelschlussprofilen eines Kanalunterteils kooperiert, sowie einer an dem Seitenelement ausgebildeten federnden Zunge. Die GB 476870 A beschreibt Kupplungselemente, die an die Außenseite des Kanalunterteils geschweißt werden und das anstoßende Kanalelement umgreifen. Die Verwendung von innen liegenden, ebenfalls angeschweißten Kupplungselementen ist in der GB 717629 A beschrieben. Zur Installation von im Winkel verlegten Leitungsführungskanälen sind beispielsweise Metallwinkel bekannt, wie sie in der EP 753917 B, der DE 29510836 U1 und der DE 9409822 U 1 beschrieben sind.

Die EP 1061623 A1, die DE 29500130 U1 und die EP 0721243 B1 zeigen Kupplungselemente, die zwischen dem Deckelverschlussprofil und dem Boden des Kanalunterteils verklemmt werden, wobei auf der Innenseite des Kanalbodens parallel zu den Seitenwänden Längsleisten vorgesehen sind, die den Fuß der Kupplungselemente halten.

Diese bekannten und unterschiedlichen Lösungen sind somit zur Verbindung zweier aufeinander stoßender Kabelkanalabschnitte vorgesehen, beispielsweise um einen Leitungsführungskanal zu verlängern oder in einem Winkel um das Eck zu verlegen. Bei diesen Lösungen ist es erforderlich, dass die Leitungskanalabschnitte entsprechend der geplanten Verlegung des Kanalsystems zuvor in ihrer richtigen Länge zugeschnitten werden. Bei einer T-Verzweigung muss hierbei der Zuschnitt passgenau der Kanalbreite entsprechen, um unschöne Spalte an den Rändern der Schnittstelle zu vermeiden. Solche Ränder besitzen Schnittkanten, die die Kabel oder Leitungen im Kanalinnenraum beschädigen können. Es besteht insbesondere bei einer nachträglichen Verbindung zweier in einem etwa rechten Winkel zueinander abzweigender Leitungsführungskanäle ein Bedarf an einer schnellen Verbindungsmöglichkeit der zu verzweigenden Kanalabschnitte, bei der zugleich eine Kaschierung der Spalte erfolgt.

Vor diesem Hintergrund ist es Aufgabe der vorliegenden Erfindung, ein Kupplungselement anzugeben, mit dem eine nachträgliche Montage eines abzweigenden Kanalabschnittes möglich ist und das zugleich vorhandene Schnittkanten zum Schutz der Kabel und Leitungen kaschiert.

Diese Aufgabe wird gelöst durch ein Kupplungselement mit den Merkmalen des Anspruchs 1. Bevorzugte Ausführungsformen finden sich in den Unteransprüchen wieder.

Das erfindungsgemäße Kupplungselement ermöglicht eine schnelle Montage und stabile Verbindung zweier in einem etwa rechten Winkel zueinander abzweigender Leitungsführungskanäle. Im Nachfolgenden soll zur Unterscheidung der unterschiedlichen Kabelkanalabschnitte vom "Hauptkanalabschnitt" und "abzweigenden Kanalabschnitt" gesprochen werden.

Die Position des Freischnittes und damit des Verzweigungspunktes ist frei wählbar und eine Verbindung des abzweigenden Kanalabschnittes kann nachträglich erfolgen, selbst wenn der Hauptkanalabschnitt bereits verlegt worden ist. Dabei kann der für die Verzweigung vorgesehene Freischnitt (beispielsweise zur Herstellung einer T-Verbindung) großzügig gewählt werden, da das erfindungsgemäße Kupplungselement seitliche Kaschierelemente umfasst, welche die unschönen Spalte an den Rändern abdecken.

Das Kupplungselement umfasst in seiner Grundform eine in etwa rechteckförmige Grundplatte mit zumindest abschnittsweise zwei sich gegenüberliegenden Längsseiten und zumindest abschnittsweise sich gegenüberliegenden Breitseiten. Vorzugsweise ist das erfindungsgemäße Kupplungselement einstückig aus einem Metallblech hergestellt und entsprechend der hier beschriebenen Form und den Elementen zugeschnitten. An der vorderen Längsseite der Grundplatte befinden sich zwei links- und rechtsseitig ausgeformte Stützlappen, und an der gegenüberliegenden hinteren Längsseite der Grundplatte befinden sich ebenfalls zwei links- und rechtsseitig ausgeformte Schenkel, die jeweils einen parallel zur einer Längsseite der Grundplatte ausgebildeten Innenrand und einen dazu nach hinten versetzten, ebenfalls am Schenkel ausgeformten Außenrand umfassen. Die links- und rechtsseitig ausgeformten Stützlappen der Grundplatte werden auf den Kanalboden des Kanalunterteils des Hauptkanalabschnittes geschoben und mit diesem verschraubt. Die links-und rechtsseitig ausgeformten Schenkel werden auf der gegenüberliegenden Seite unter den Kanalboden des Kanalunterteils des abzweigenden Kanalabschnittes geschoben. Eine zwischen den Schenkeln angeordnete Nase liegt auf dem Kanalboden des abzweigenden Kanalabschnittes auf und fixiert dadurch das Kupplungselement von oben.

An dem Innenrand der Schenkel befindet sich jeweils eine gegenüber der Oberfläche der Grundplatte in einem Winkel von etwa 90° nach oben gebogene und in Längsrichtung der Grundplatte parallel dazu verlaufende Kaschierleiste. An deren zur Mitte der Grundplatte weisendem Ende ist eine zur vorderen Längsseite der Grundplatte weisende Zunge ausgeformt. Vorzugsweise ist die Zunge gegenüber der Grundfläche der Kaschierleiste in einem Winkel von etwa 90° gebogen.

Die nach oben ausgeformten seitlichen Flächen der Kaschierleisten ermöglichen eine Kaschierung der offenen Spalte beim Hauptkanal, während die in einem Winkel von etwa 90° umgebogenen Zungen eine Kaschierung der Spalte des abzweigenden Kanals übernehmen.

Zum Halt des Kupplungselements befindet sich vorzugsweise zwischen den beiden Stützlappen an der vorderen Längsseite der Grundplatte zusätzlich eine mittig gelegene Nase. Diese stützt sich im montierten Zustand am Boden des Kanalunterteils des Hauptkanals ab. Von der Gegenseite drücken die seitlich ausgeformten Schenkel von unten gegen den Kanalboden des abzweigenden Kanalabschnittes.

Vorzugsweise wird man bei der Herstellung aus Metall von einem in etwa rechteckförmigen Blech ausgehen, bei dem die Stützlappen und die Schenkel aus den Eckbereichen der rechteckförmigen Grundplatte freigeschnitten sind, wobei sich die oben erwähnte Nase mittig in dem Freischnitt zwischen den Stützlappen befindet.

An der Unterseite der Grundplatte befinden sich ferner Anschlagselemente für die zu verbindenden Kanalunterteile des Leitungsführungskanals. Diese bewirken, dass der Rand an der Stirnseite des Kanalunterteils des abzweigenden Kanalabschnittes von hinten gegen die Anschlagselemente anstößt, während der seitliche Rand des Kanalunterteils des Hauptkanalabschnittes an deren Vorderseite anstößt. Durch die Anschlagselemente wird zudem vermieden, dass der Boden des Kanalunterteils des zu verzweigenden Kanalabschnittes in das Kanalunterteil des Hauptkanalabschnittes rutscht. Die Anschlagselemente definieren einen Spalt zwischen den zu verbindenden Kanalabschnitten und sorgen für eine plane Verlegung der Kanalunterteile bei gleichzeitiger Vermeidung einer Überlappung.

Vorzugsweise ist das erfindungsgemäße Kupplungselement symmetrisch aufgebaut. Hierfür ist vorzugsweise die Grundplatte mit den beiden seitlichen Stützlappen und den seitlichen Schenkeln sowohl entlang ihrer Querachse als auch entlang ihrer Längsachse spiegelsymmetrisch aufgebaut.

Gegenüber den beiden an der hinteren Längsseite der Grundplatte ausgeformten Schenkeln sind die Kaschierleisten leicht zur Längsachse der Grundplatte versetzt, so dass die beiden Schenkel auf den Kanalboden des Kanalunterteils aufliegen, während die beiden Stützlappen an dem jeweils anderen Kanalabschnitt aufliegen. Dabei sind die Abstände der Kaschierleisten so gewählt, dass diese exakt an der Seitenwand des Kanalunterteils des Hauptkanalabschnittes anliegen. Auch die Abstände der beiden in einem Winkel von 90° umgebogenen Zungen sind so gewählt, dass diese im Wesentlichen der Kanalbreite des Kanalunterteils des zu verzweigenden Kanalabschnittes entsprechen. In einer Ausführungsform ist vorgesehen, dass die Enden der an den Schenkeln der Grundplatte ausgeformten Zungen der beiden Kaschierleisten spitz zusammenlaufend sind.

Die genaue geometrische Ausgestaltung der beiden Stützlappen bzw. der Schenkel ist im Allgemeinen frei wählbar. Die erwähnte hintere Längsseite der Grundplatte kann daher entweder mit dem Außenrand der beiden Schenkel als durchgehende Linie oder auch versetzt dazu verlaufen.

Die Erfindung wird in den nachfolgenden beiden Zeichnungen näher erläutert. Es zeigen
Fig. 1 eine isometrische Darstellung einer Ausführungsform des erfindungsgemäßen Kupplungselementes,
Fig. 2 ein Leitungsführungskanalsystem, das mit einem erfindungsgemäßen Kupplungselement ausgerüstet ist.

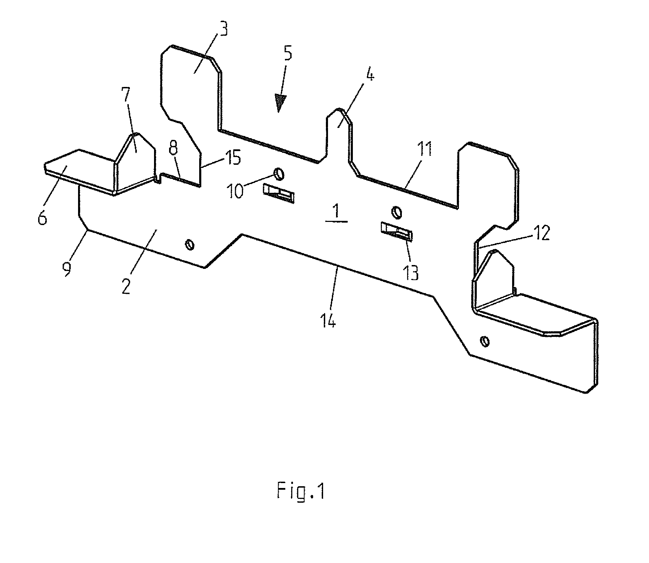

In Fig. 1 ist eine Ausführungsform des erfindungsgemäßen Kupplungselementes gezeigt. Dieses besteht aus einer in etwa rechteckförmigen Grundplatte 1 mit einer vorderen Längsseite 11 und einer hinteren Längsseite 14 sowie zwei seitlichen Breitseiten 12, 15. An der vorderen Längsseite 11 der Grundplatte 1 befinden sich jeweils an den Ecken links- und rechtsseitig zwei Stützlappen 3. An der hinteren Längsseite 14 der Grundplatte 1 befinden sich ebenfalls jeweils an den Ecken links- und rechtsseitig zwei Schenkel 2.

Die Schenkel 2 umfassen einen oberen Innenrand 8 und einen Außenrand 9. Der Innenrand 8 verläuft in etwa parallel zu der oberen Längsseite 11 bzw. unteren Längsseite 14 der Grundplatte 1. In der gezeigten Ausführungsform verläuft auch der Außenrand 9 parallel zur hinteren Längsseite 14 der Grundplatte 1.

Am Innenrand 8 des Schenkels 2 ist eine Kaschierleiste in einem Winkel von etwa 90° nach oben gebogen. An dem zur Mitte der Grundplatte 1 weisenden Ende der Kaschierleiste 6 ist eine nach vorne in einem Winkel von etwa 90° umgebogene Zunge 7 ausgebildet. Die Enden der Zunge 7 sind spitz zusammenlaufend. Das Kupplungselement ist symmetrisch aufgebaut, so dass die zuvor erwähnten Elemente sowohl links- als auch rechtsseitig entlang der Spiegelachsen ausgeformt sind.

Die Flächen der Kaschierleisten 6 sorgen für eine Kaschierung der Spalte beim Hauptkanalabschnitt. Die Spalte des abzweigenden Kanalabschnittes werden durch die Flächen der Zunge 7 kaschiert. Die Kaschierungen der Spalte sorgen zum einen für ein optisch ansprechendes Erscheinungsbild des Kanalsystems. Andererseits werden jedoch auch die im Kabelkanalinneren geführten Kabel und Leitungen geschützt. Insbesondere bei Metallkanälen entstehen beim Zuschnitt der Kanalabschnitte scharfe Kanten, welche die Kabel oder Leitungen beschädigen könnten.

Um eine Überlappung der Kanalböden zu vermeiden, sind Anschlagselemente 13 an der Unterseite der Grundplatte 1 ausgeformt. Diese definieren einen Mindestabstand zwischen den Rändern der aufeinander treffenden Kanalböden.

An der Oberseite der vorderen Längsseite 11 der Grundplatte 1 ist eine Nase 4 ausgeformt, welche sich in einem Freischnitt 5 befindet, der von den beiden Stützlappen 3 gebildet wird. Der Kanalboden des Kanalunterteils des abzweigenden Kanalabschnittes liegt auf den beiden Stützlappen 3 auf. Von der Gegenseite drückt die Nase 4 von oben auf den Kanalboden des Kanalunterteils des abzweigenden Kanalabschnittes. Das Kupplungselement am Kanal bei der Montage wird dadurch von der Nase 4 und den Stützlappen 3 von oben bzw. unten gehalten. Auf der gegenüberliegenden Seite liegen die Schenkel 2 auf dem Kanalboden des Kanalunterteils des Hauptkanalabschnittes auf.

Die Fixierung des Kupplungselementes erfolgt über Befestigungsmittel, wofür entsprechende Befestigungsöffnungen 10 vorgesehen sind.

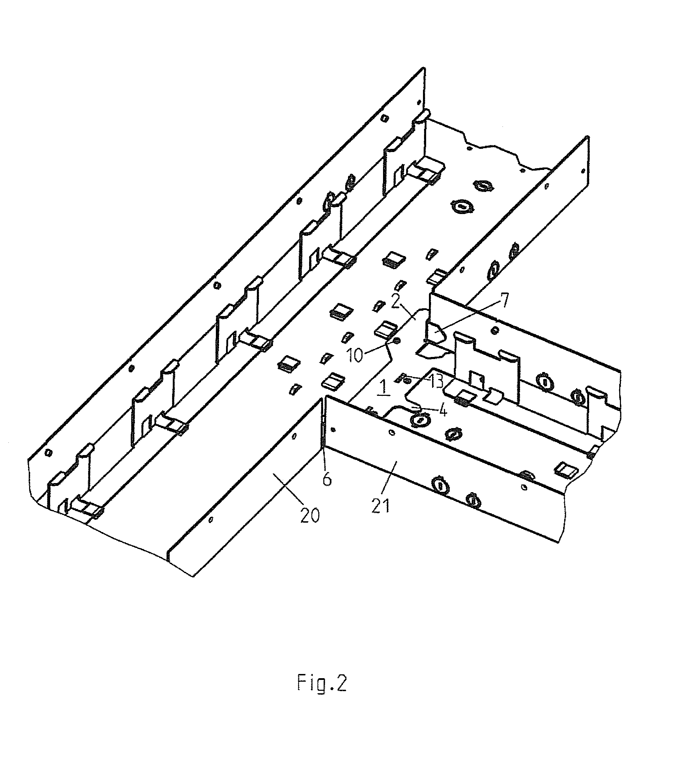

In Fig. 2 ist ein Anwendungsfall für das erfindungsgemäße Kupplungselement gezeigt. Man erkennt einen Hauptkanalabschnitt 20 sowie einen von diesem abzweigenden Kanalabschnitt 21. In dem Hauptkanalabschnitt 20 ist an der gewählten Abzweigeposition ein Freischnitt für den abzweigenden Kanalabschnitt 21 eingebracht. Das Kupplungselement verbindet die beiden in T-Form abzweigenden Kanalabschnitte 20, 21. Deutlich ist zu erkennen, wie die Zungen 7 des Kupplungselements sowie die Kaschierelemente 6 an den Seitenwänden der Kanalabschnitte 20, 21 anliegen und die Spalte und kaschieren. Die Schenkel 2 des Kupplungselementes liegen auf dem Kanalboden des Kanalabschnittes 2 auf. Die Stützlappen 3 stützen den abzweigenden Kanalabschnitt 21 von unten (nicht zu sehen). Die Nase 4 liegt oben auf dem Kanalboden des abzweigenden Kanalabschnittes 21 auf. Über Befestigungsmittel wird das Kupplungselement schließlich fixiert.

Ein besonderer Vorteil des erfindungsgemäßen Kupplungselementes besteht darin, dass eine nachträgliche Verzweigung eines Leitungskanalsystems, beispielsweise zu einer T-Form, an beliebiger Stelle möglich ist. Dabei kann der Freischnitt großzügig erfolgen, da die vorgesehenen Kaschierleisten mit den daran ausgeformten Zungen die durch den Freischnitt entstehende Spalte ausreichend kaschieren. Die bei einem Zuschnitt entstehenden scharfen Schnittkanten, die zu einer Verletzung der im Kabelkanalinneren geführten Leitungen oder Kabel führen können, werden ebenfalls durch die Kaschierleisten 6 und die darin ausgeformten Zungen 7 abgedeckt, so dass nicht zu befürchten ist, dass die Leitungen oder Kabel durch die scharfen Kanten verletzt werden.

## Patentansprüche

1. Kupplungselement zur nachträglichen Verbindung zweier in einem in etwa rechten Winkel zueinander abzweigender Leitungsführungskanäle, umfassend eine in etwa rechteckförmige Grundplatte (1) mit zwei sich gegenüberliegenden Längsseiten (11, 14) und sich gegenüberliegenden Breitseiten (12, 15) sowie zwei links- und rechtsseitig an der vorderen Längsseite (11) der Grundplatte (1) ausgeformten Stützlappen (3) und ebenfalls zwei links- und rechtsseitig an der gegenüberliegenden hinteren Längsseite (14) der Grundplatte (1) ausgeformten Schenkeln (2), die jeweils einen parallel zu einer Längsseite (11, 14) der Grundplatte (1) ausgebildeten Innenrand (8) und einen dazu nach hinten versetzten, ebenfalls am Schenkel (2) ausgeformten Außenrand (9) umfassen, **dadurch gekennzeichnet, dass** an dem Innenrand (8) der Schenkel (2) jeweils eine gegenüber der Oberfläche der Grundplatte (1) in einem Winkel von etwa 90 Grad nach oben gebogene und in Längsrichtung der Grundplatte (1) verlaufende Kaschierleiste (6) ausgeformt ist, an deren zur Mitte der Grundplatte (1) weisendem Ende eine zur vorderen Längsseite (11) der Grundplatte (1) weisende Zunge (7) ausgeformt ist.

2. Kupplungselement nach Anspruch 1, **dadurch gekennzeichnet, dass** zwischen den beiden Stützlappen (3) an der vorderen Längsseite (11) der Grundplatte (1) eine Nase (4) ausgeformt ist.

3. Kupplungselement nach einem der Ansprüche 1 oder 2, **dadurch gekennzeichnet, dass** die Stützlappen (3) und die Schenkel (2) aus den Eckbereichen der rechteckförmigen Grundplatte (1) freigeschnitten sind.

4. Kupplungselement nach einem der Ansprüche 2 bis 3, **dadurch gekennzeichnet, dass** die Stützlappen (3) einen Freischnitt (5) definieren und sich die Nase (4) mittig in dem Freischnitt (5) befindet.

5. Kupplungselement nach einem der Ansprüche 1 bis 4, **dadurch gekennzeichnet, dass** die an den Schenkeln (2) der Grundplatte (1) ausgeformten Zungen (7) gegenüber den Kaschierleisten (6) in einem in etwa rechten Winkel zueinander angeordnet sind.

6. Kupplungselement nach einem der Ansprüche 1 bis 5, **dadurch gekennzeichnet, dass** an der Unterseite der Grundplatte (1) Anschlagselemente (13) für die zu verzweigendenden Kanalunterteile des Leitungsführungskanals ausgeformt sind.

7. Kupplungselement nach einem der Ansprüche 1 bis 6, **dadurch gekennzeichnet, dass** die Grundplatte (1) mit den beiden seitlichen Stützlappen (3) und den seitlichen Schenkeln (2) sowohl entlang ihrer Querachse als auch entlang ihrer Längsachse symmetrisch aufgebaut ist.

8. Kupplungselement nach einem der Ansprüche 1 bis 7, **dadurch gekennzeichnet, dass** die beiden seitlichen Kaschierleisten (6) in etwa mittig zur Längsseite der Grundplatte (1) angeordnet sind.

9. Kupplungselement nach einem der Ansprüche 1 bis 8, **dadurch gekennzeichnet, dass** die Enden der an den Schenkeln (2) der Grundplatte (1) ausgeformten Zungen (7) der beiden Kaschierleisten (6) spitz zusammenlaufend sind.

10. Kupplungselement nach einem der Ansprüche 1 bis 9, **dadurch gekennzeichnet, dass** der Außenrand (9) der beiden Schenkel (2) und die hintere Längsseite (14) der Grundplatte (1) entweder eine durchgehende gerade oder zueinander versetzte Linie bilden.
